(19) Europäisches Patentamt
European Patent Office
Office européen des brevets

(11) EP 0 596 559 B1

(12) **EUROPÄISCHE PATENTSCHRIFT**

(45) Veröffentlichungstag und Bekanntmachung des Hinweises auf die Patenterteilung:
**04.12.1996 Patentblatt 1996/49**

(51) Int. Cl.$^6$: **A62D 3/00**

(21) Anmeldenummer: **93203007.5**

(22) Anmeldetag: **28.10.1993**

(54) **Verfahren zur Entsorgung von arsenhaltigen Kampfstoffen**

Method for the elimination of arsenic-containing warfare agents

Procédé de élimination des agents de combat contenant de l'arsenic

(84) Benannte Vertragsstaaten:
**DE**

(30) Priorität: **05.11.1992 DE 4237388**

(43) Veröffentlichungstag der Anmeldung:
**11.05.1994 Patentblatt 1994/19**

(73) Patentinhaber: **METALLGESELLSCHAFT AG**
**60323 Frankfurt am Main (DE)**

(72) Erfinder:
• **Samant, Gurudas, Dr.**
**D-35112 Fronhausen (DE)**
• **Becker, Stephan, Dr.**
**D-35444 Biebertal (DE)**
• **Stöldt, Ernst, Dr.**
**D-64646 Heppenheim (DE)**
• **Stolarski, Eberhard, Dr.**
**D-61440 Oberursel (DE)**

(56) Entgegenhaltungen:
**EP-A- 0 347 240       EP-A- 0 451 006**
**WO-A-90/06820**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Rank Xerox (UK) Business Services
2.13.9/3.4

# Beschreibung

Die Erfindung betrifft ein Verfahren zur Entsorgung von arsenhaltigen Kampfstoffen.

Eine große Zahl chemischer Kampfstoffe besteht aus organischen Arsenverbindungen. Die wichtigsten Vertreter dieser Klasse sind Dichlor-(2-Chlorvinyl)-Arsin, bekannt unter dem Namen Lewisit, Phenylarsinchlorid, bekannt unter dem Namen Pfiffkus, 10-Chlor-5, 10-dihydrophenarsazin, bekannt unter dem Namen Adamsit, Diphenylarsinchlorid und Diphenylarsincyanid, bekannt unter dem Namen Clark I und Clark II.

Lewisit zum Beispiel wird aus Acethylen und Arsentrichlorid hergestellt. Lewisit ist bei Raumtemperatur flüssig und siedet bei 190°C. Es liegt überwiegend in der trans-Konfiguration als $\alpha$-Lewisit vor. Das techni-sche Lewisit enthält als Nebenprodukt $\beta$-Lewisit, das die cis-Konfiguration aufweist. Als weiteres Nebenprodukt enthält das technische Lewisit nicht umgesetztes Arsentrichlorid, das einen Siedepunkt von 130°C aufweist.

Diese Verbindungen haben gemeinsam, daß sie leicht hydrolysefähige Chloratome besitzen, so daß in Gegenwart von Feuchtigkeit Salzsäure freigesetzt wird, die gewebezerstörend auf die Haut, Augen und Atemwege einwirkt. Lewisit hat somit eine doppelte toxische Wirkung, zum einen durch die eigentliche Giftwirkung des Schwermetalls Arsen und aller Arsenverbindungen, die löslich sind, und zum anderen durch die Freisetzung von Salzsäure.

Auch das Hydrolyseprodukt des Lewisits (2-Chlorvinylarsenoxid) ist ein starkes Hautgift, das allerdings nicht so leicht verdampfbar ist. Selbst die geringe Konzentration von nur 0,12 mg/l Lewisit in der Luft führt nach 10 minütigem Einatmen zum sicheren Tod. Darüber hinaus wirkt Lewisit, insbesondere in Gegenwart von Feuchtigkeit korrodierend. Aufgrund der Vinyl-Gruppe kann Lewisit prinzipiell auch polymerisieren. Auch aus diesem Grund ist zu erwarten, daß alte Lewisit-Bestände zahlreiche andere chemische Verbindungen und Korrosionsprodukte enthalten.

Die Entsorgung der arsenhaltigen Kampfstoffe und der mit arsenhaltigen Kampfstoffen verseuchten Böden ist schwierig. Die arsenhaltigen Kampfstoffe müssen zunächst vollständig vernichtet werden. Dabei muß verhindert werden, daß zum einen HCl-Gas entweicht und zum anderen, daß dampfförmiges metallisches Arsen oder dampfförmige Arsen-Verbindungen, wie Arsen-Oxide, die sich bei der Vernichtung der arsenhaltigen Kampfstoffe bilden können, entweichen. Schließlich ist zu gewährleisten, daß wasserlösliche Arsen-Verbindungen nicht unkontrolliert aus dem Entsorgungsprozeß entweichen.

Der Erfindung liegt die Aufgabe zugrunde, ein Verfahren zur vollständigen Vernichtung und Entsorgung von arsenhaltigen Kampfstoffen bereitzustellen. Der Erfindung liegt weiter die Aufgabe zugrunde, bei der Vernichtung und Entsorgung von arsenhaltigen Kampfstoffen sich bildendes metallisches Arsen und sich bildende Arsen-Verbindungen in wirtschaftlicher Weise in eine deponiefähige Form zu bringen.

Die Lösung dieser Aufgabe erfolgt erfindungsgemäß dadurch, daß

a) die arsenhaltigen Kampfstoffe bei Temperaturen von 700 bis 1300°C unter oxidierenden Bedingungen mit einem Sauerstoffgehalt im Abgas von mindestens 1 % verbrannt werden, wobei das Mol-Verhältnis von Wasserstoff zu dem in den arsenhaltigen Kampfstoffen enthaltenen Chlor in der Verbrennung von 1 bis 30 eingestellt wird;

b) das Abgas gemäß (a) mit einer Temperatur von 400 bis 1000°C in eine Wirbelschicht eingeleitet wird;

c) in die Wirbelschicht Zusatzstoffe, die aus einem oder mehreren Stoffen aus der Gruppe der Oxide, Hydroxide, Carbonate, Sulfate, Chloride von Eisen, Calcium, Magnesium, Aluminium oder Barium bestehen und die eine Korngröße unter 3 mm haben, eingeführt werden, wobei die Zusatzstoffe in einem stöchiometrischen Überschuß bezogen auf Arsen zugesetzt werden und der Arsengehalt bei einer Temperatur von 400 bis 1000°C in stabile Arsenate mit sehr geringer Löslichkeit in Wasser umgesetzt wird, und die Arsenate aus dem Gasstrom abgeschieden und abgeführt werden;

d) das Abgas gemäß (c) in saurer oder alkalischer wässriger Phase gewaschen wird, wobei die gemäß (c) nicht zu stabilen Arsenaten umgesetzten und mit dem Abgas gemäß (c) entweichenden Arsenverbindungen in der wässrigen Phase abgeschieden werden;

e) das Arsen aus der wässrigen Phase gemäß (d) durch Zugabe von einem oder mehreren Zusatzstoffen aus der Gruppe der Oxide, Hydroxide, Carbonate, Sulfate, Chloride von Eisen, Calcium, Magnesium, Aluminium oder Barium gefällt wird;

f) aus der Suspension gemäß (d) und (e) der Feststoff abgeschieden und in die Wirbelschicht gemäß (b) zurückgeführt wird;

g) die gemäß (f) anfallende Lösung neutralisiert und entsorgt wird.

Die arsenhaltigen Kampfstoffe und die arsenhaltigen Bestandteile der kontaminierten Böden werden thermisch unter oxidierenden Bedingungen vernichtet, wobei das in den arsenhaltigen Kampfstoffen enthaltene Chlor mit Wasserstoff, der mit dem Brennstoff zugeführt wird, zu HCl-Gas reagiert. Sauerstoff wird in Form von Luft, mit Sauerstoff angereicherter Luft oder technischem Sauerstoff in die Verbrennungsanlage eingeführt.

Die arsenhaltigen Kampfstoffe können in verschlossenen Behältern direkt in die Verbrennungsanlage eingeführt werden. Unter dem Ausdruck "arsenhaltige Kampfstoffe" sind sowohl arsenhaltige Kampfstoffe als solche als auch mit arsenhaltigen Kampfstoffen kontaminierte Böden zu verstehen. Die Verbrennungsanlage kann eine vertikale oder horizontale Brennkammer, ein Drehrohrofen oder ein System der klassischen oder zirkulierenden Wirbelschicht sein. Wird das Abgas gemäß (a) anschließend bei einer niedrigeren Temperatur in einer Wirbelschicht weiterverarbeitet, erfolgt vor der Einleitung in die Wirbelschicht eine Abkühlung des Abgases gemäß (a) auf die erforderliche Temperatur in einer Kühlvorrichtung, z. B. in einem Wärmetauscher. Die Wirbelschicht kann eine klassische oder zirkulierende Wirbelschicht sein. In der Wirbelschicht erfolgt die sogenannte Arseneinbindung, was die Bildung von stabilen Arsenaten bedeutet. Dazu wird das Abgas gemäß (a) bei einer Temperatur von 400 bis 1000°C mit Zusatzstoffen gemäß (c) unter oxidierenden Bedingungen behandelt. Der Sauerstoffgehalt im Abgas gemäß (c) kann beliebig hoch sein, z. B. 50 %. Der Sauerstoff wird in Form von Luft mit Sauerstoff angereicherter Luft oder technischem Sauerstoff als Fluidisierungsgas in die Wirbelschicht eingeführt. Unter dem Ausdruck "stabile Arsenate" sind solche Arsenate zu verstehen, die nur eine sehr geringe Löslichkeit in Wasser haben. Mit steigendem Sauerstoffpartialdruck bei der Arsenatbildung nimmt die Löslichkeit der Arsenverbindungen im Wasser ab. Die Zusatzstoffe werden in einer solchen Menge zugegeben, daß sie mindestens zur Bildung der Arsenate ausreichen. Die aus dem Gasstrom abgeschiedenen stabilen Arsenate haben eine so geringe Löslichkeit, daß sie ohne besondere Vorkehrungen deponiert werden können. Die Löslichkeit der stabilen Arsenate beträgt in Übereinstimmung mit den deutschen Normen DEV-S 4-Laugung < 1 mg/l.

Die wässrige Phase gemäß (d) kann sauer oder alkalisch sein. In der wässrigen Phase gemäß (d) werden dampfförmige oder aerosolförmige Arsenverbindungen abgeschieden, die gemäß (c) nicht zu stabilen Arsenaten umgesetzt worden sind und daher im Abgas gemäß (c) entweichen. Wenn die wässrige Phase gemäß (d) sauer ist, gehen die Arsenverbindungen in Lösung. Wenn die wässrige Phase gemäß (d) schwach alkalisch ist, fällt ein Teil des ausgewaschenen Arsens oder der arsenhaltigen Verbindungen direkt als Arsenate aus und der Rest muß durch Zugabe von Zusatzstoffen gemäß (e) und unter Einwirkung des vorhandenen Sauerstoffs gegebenenfalls oxidativ als stabile Arsenate ausgefällt werden. Wenn in saurer Phase gearbeitet wird, müssen das vorhandene metallische Arsen und die Arsenverbindungen durch Zugabe der Zusatzstoffe gemäß (e) unter Einwirkung des vorhandenen Sauerstoffs gegebenenfalls oxidativ als stabile Arsenate ausgefällt werden.

Der bevorzugte saure Bereich liegt bei pH-Werten von 3 bis 5 und der bevorzugte alkalische Bereich liegt bei pH-Werten von 8 bis 11. Der Feststoff gemäß (d) und (e) wird filtriert. Wie vorstehend erläutert, können Feststoffe schon in der wässrigen Phase gemäß (d) ausfallen. Nach der Trennung wird der Filterkuchen in die Arseneinbindung gemäß (c) zurückgeführt. Somit werden dampfförmiges metallisches Arsen und dampfförmige arsenhaltige Stoffe, die im Abgas gemäß (c) aus der klassischen oder zirkulierenden Wirbelschicht entweichen, nach einer weiteren Behandlung gemäß (d) und (e) in die Arseneinbindung gemäß (c) zurückgeführt und von dort anschließend ohne besondere Vorkehrungen deponiert. Die vom Feststoff abgeschiedene Lösung wird neutralisiert und in an sich bekannter Weise entsorgt.

Eine vorzugsweise Ausgestaltung der Erfindung besteht darin, daß die Verbrennung gemäß (a) bei Temperaturen von 1000 bis 1200°C erfolgt.

Eine vorzugsweise Ausgestaltung der Erfindung besteht darin, daß das Mol-Verhältnis von Wasserstoff zu Chlor bei der Verbrennung gemäß (a) von 1,5 bis 3 eingestellt wird.

Eine vorzugsweise Ausgestaltung der Erfindung besteht darin, daß die Verbrennung gemäß (a) in einer Wirbelschicht mit einem Hilfsbett aus Tonerde, Sand oder Eisenoxid erfolgt. Die Teilchen des Hilfsbetts weisen eine mittlere Korngröße von 100 - 200 µm auf. Bei einer Verbrennungstemperatur von unterhalb 1000°C werden bei Verwendung von Eisenoxid als Hilfsbett bereits in der Verbrennung stabile Arsenate gebildet, bei einer Temperatur von oberhalb 1000°C zersetzen sich die Eisenarsenate.

Eine vorzugsweise Ausgestaltung der Erfindung besteht darin, daß das Abgas gemäß (a) mit Temperaturen von 500 bis 700°C in eine Wirbelschicht eingeführt wird. Die Umsetzung zu stabilen Arsenaten in der Wirbelschicht erfolgt bevorzugt in diesem Temperaturbereich. Das Abgas gemäß (a) wird vor der Einleitung in die Wirbelschicht, falls erforderlich, auf die notwendige Temperatur abgekühlt.

Eine vorzugsweise Ausgestaltung der Erfindung besteht darin, daß das Abgas gemäß (a) in das System einer zirkulierenden Wirbelschicht eingeleitet wird. Das System der zirkulierenden Wirbelschicht besteht aus dem Wirbelschichtreaktor, dem Feststoffabscheider und der Rückführleitung. Dieses Wirbelschichtprinzip zeichnet sich dadurch aus, daß im Unterschied zur "klassischen" Wirbelschicht, bei der eine dichte Phase durch einen deutlichen Dichtesprung von dem darüber befindlichen Gasraum getrennt ist, Verteilungszustände ohne definierte Grenzschicht vorliegen. Ein Dichtesprung zwischen dichter Phase und darüber befindlichem Staubraum ist nicht vorhanden, jedoch nimmt innerhalb des Reaktors die Feststoffkonzentration von unten nach oben ständig ab.

Aus dem oberen Teil des Reaktors wird eine Gas-Feststoff-Suspension ausgetragen. Bei der Definition der Betriebsbedingungen über die Kennzahlen von Froude und Archimedes ergeben sich die Bereiche:

$$0{,}1 \leqq 3/4 \cdot Fr^2 \cdot \frac{\rho g}{\rho k - \rho g} \leqq 10,$$

bzw.

$$0{,}01 \leqq Ar \leqq 100,$$

wobei

$$Ar = \frac{d_k^{\,3} \cdot g\,(\rho k - \rho g)}{\rho g \cdot \nu^2} \quad und$$

$$Fr^2 = \frac{u^2}{g \cdot d_k}$$

sind.

Es bedeuten:

| | |
|---|---|
| u | die relative Gasgeschwindigkeit in m/sec. |
| Ar | die Archimedes-Zahl |
| Fr | die Froude-Zahl |
| $\rho$ g | die Dichte des Gases in kg/m³ |
| $\rho$ k | die Dichte des Feststoffteilchens in kg/m³ |
| $d_k$ | den Durchmesser des kugelförmigen Teilchens in m |
| $\nu$ | die kinematische Zähigkeit in m²/sec. |
| g | die Gravitationskonstante in m/sec². |

Die aus dem Wirbelschichtreaktor ausgetragene Suspension wird in den vorzugsweise als Zyklon gestalteten Abscheider der zirkulierenden Wirbelschicht geleitet, dort weitgehend von Feststoff befreit, und der abgeschiedene Feststoff wird derart in den Wirbelschichtreaktor zurückgeleitet, daß innerhalb der zirkulierenden Wirbelschicht der Feststoffumlauf mindestens das Vierfache des im Wirbelschichtreaktor befindlichen Feststoffgewichts beträgt.

In einer zirkulierenden Wirbelschicht wird praktisch eine vollständige Umsetzung erzielt.

Eine vorzugsweise Ausgestaltung der Erfindung besteht darin, daß zu der wässrigen Phase gemäß (d) Wasserstoffperoxid, Ozon oder $KMnO_4$ zugesetzt werden. Das Oxidationsmittel kann zugesetzt werden, wenn der vorhandene Sauerstoffgehalt für die Umsetzung der Arsengehalte zu stabilen Arsenaten und daher zu deren Fällung nicht ausreicht.

Eine vorzugsweise Ausgestaltung der Erfindung besteht darin, daß mindestens 80 % der Zusatzstoffe gemäß (c) in einer Korngröße von 10 bis 200 µm eingesezt werden. Bei dieser Korngröße erfolgt eine besonders schnelle und weitgehende Arsenatbildung.

Die Erfindung wird anhand eines Beispiels und von Figuren näher erläutert.

Es zeigen:

Fig. 1:     eine schematisch dargestellte Anlage zur Entsorgung von arsenhaltigen Kampfstoffen, wobei die Verbrennung in einer vertikalen Brennkammer erfolgt.

Fig. 2:     eine schematisch dargestellte Anlage zur Entsorgung von arsenhaltigen Kampfstoffen, wobei die Verbrennung in einem System der zirkulierenden Wirbelschicht mit einem Hilfsbett aus Tonerde, Sand oder Eisenoxid erfolgt.

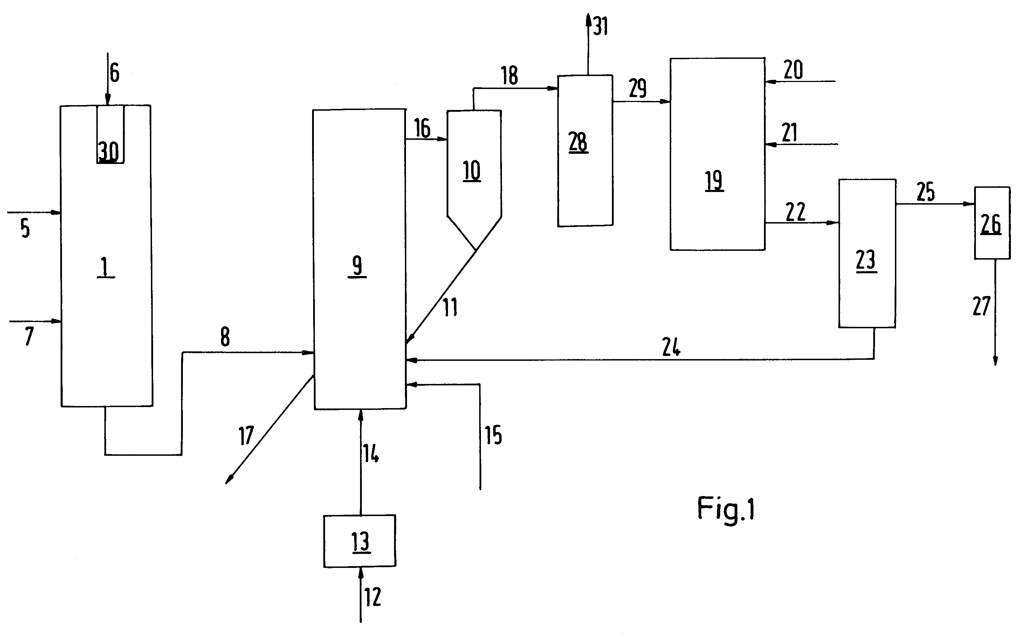

In der Fig. 1 besteht die Verbrennungsanlage aus einer vertikalen Brennkammer (1). Über Leitung (5) werden die arsenhaltigen Kampfstoffe verpackt oder in einer dafür vorgesehenen Vorrichtung vorher geöffnet und in die Verbrennungsanlage eingeführt. Über die Leitung (6) werden Brennstoffe, insbesondere Methan, in den Brenner (30) der vertikalen Brennkammer (1) eingeleitet. Über Leitung (7) wird zusätzliche Luft zur oxidativen Verbrennung eingeleitet. Über Leitung (8) wird das Abgas in ein System der zirkulierenden Wirbelschicht eingeleitet. Die zirkulierende Wirbelschicht besteht aus dem Wirbelschichtreaktor (9), dem Rückführzyklon (10) und der Rückführleitung (11). Über Leitung (12) wird Luft in den Wärmetauscher (13) geleitet, dort vorgewärmt und über Leitung (14) als Fluidisierungsgas in den Reaktor (9) eingeleitet. Über Leitung (15) werden Zusatzstoffe gemäß (c) in den Reaktor (9) eingeführt. Das Abgas wird über die Leitung (16) in den Zyklon (10) geleitet. Die im Abgas mitgerissenen Feststoffe werden im Zyklon (10) abgeschieden und über Leitung (11) in den Reaktor (9) zurückgeführt. Die deponiefähigen im Reaktor (9) gebildeten stabilen Arsenate werden über die Leitung (17) abgeführt und deponiert.

Die Abgase werden aus dem Zyklon (10) über die Leitung (18) in einen Wäscher (28) geleitet. Aus dem Wäscher (28) wird die wässrige Phase über die Leitung (29) in einen Fällungsreaktor (19) geleitet. Aus dem Wäscher (28) wird über die Leitung (31) arsenfreies und gereinigtes Abgas abgeführt. Über die Leitung (20) werden Zusatzstoffe gemäß (e) in den Fällungsreaktor (19) geleitet. Der Fällungsreaktor (19) besteht aus mehreren nicht dargestellten Fällungseinheiten. Über Leitung (21) werden gegebenenfalls Oxidationsmittel, wie z. B. Wasserstoffperoxid, Ozon oder $KMnO_4$ in den Fällungsreaktor (19) geleitet. Über Leitung (22) wird die Suspension aus dem Fällungsreaktor (19) in eine Filtriervorrichtung (23) geleitet, wo eine Fest-Flüssig-Trennung erfolgt. Über Leitung (24) wird der entstandene und in der Filtriervorrichtung (23) abgeschiedene Niederschlag in den Reaktor (9) zurückgeführt. Über Leitung (25) wird die in der Filtriervorrichtung (23) abgeschiedene wässrige Lösung in den Reaktor (26) eingeleitet und dort neutralisiert. Über Leitung (27) wird die neutralisierte wässrige Lösung in an sich bekannter Weise entsorgt.

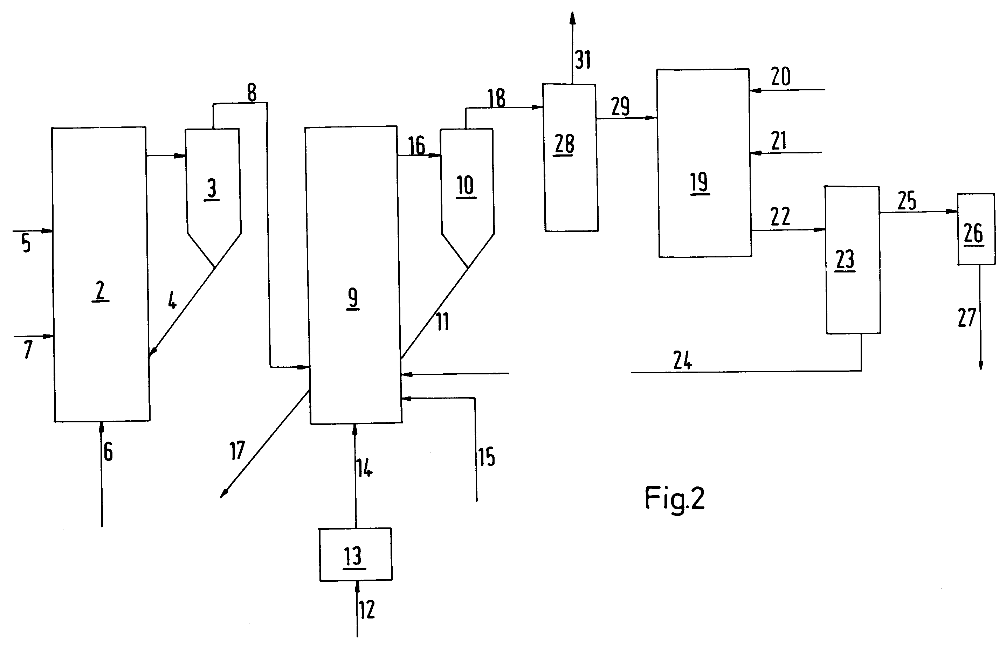

In Fig. 2 ist eine erfindungsgemäße Anlage dargestellt, die sich von der Anlage in Fig. 1 dadurch unterscheidet, daß anstelle der vertikalen Brennkammer (1) ein System der zirkulierenden Wirbelschicht zur Verbrennung der Kampfstoffe verwendet wird. Das System der zirkulierenden Wirbelschicht besteht aus dem Wirbelschichtreaktor (2), dem Rückführzyklon (3) und der Rückführleitung (4). Das Abgas wird aus dem Rückführzyklon (3) über die Leitung (8) in den Reaktor (9) eingeführt.

Beispiel

Da ein chemischer Kampfstoff, wie z. B. Lewisit, nicht zur Verfügung stand, wurden für die auszuführenden Versuche Arsentrichlorid und Methan verwendet. Die Apparatur bestand aus den folgenden hintereinander angeordneten Teilen: Horizontales heizbares Quarzrohr, in dessen Mitte ein porzellanschiffchen plaziert war, einem indirekten Kühler, einer klassischen Wirbelschicht mit nachgeschaltetem Filter und drei hineinander angeordneten Waschflaschen mit Eingangsrohren, an deren Enden Fritten angeordnet waren und die mit Auslassungsrohren versehen waren. In das Porzellanschiffchen wurden 9,06 g (0,05 Mol) $AsCl_3$ gegeben. Das Schiffchen wurde im Quarzrohr plaziert. Über zwei verschiedene Rotameter wurden getrennt Luft und Methan in das Quarzrohr eingeleitet. Im Quarzrohr verbrannte ein Teil des Methans, während ein Teil des Methans mit dem $AsCl_3$, zu HCl und As reagierte; das As wurde durch den im Überschuß vorhandenen Sauerstoff zu Arsenoxiden verbrannt. Das Quarzrohr wurde auf eine Temperatur von 1050°C aufgeheizt. Es wurden 3,5 l (0,156 Mol) Methan eingeleitet und es wurde soviel Luft durchgeleitet, daß der Sauerstoffgehalt im Abgas des Quarzrohres 4 bis 6 % betrug. Das Abgas wurde vor dem Einleiten in die klassische Wirbelschicht auf eine Temperatur von 700°C im indirekten Kühler abgekühlt. Das Abgas aus dem Kühler wurde in die klassische Wirbelschicht eingeleitet. Die klassische Wirbelschicht wurde konstant auf 700°C indirekt geheizt und vor der Reaktion mit 5 g (0,0313 Mol) $Fe_2O_3$, das eine Korngröße von 20 bis 50 µm hatte, oberhalb des Düsenboden gefüllt. Als Fluidisierungsgas wurde soviel Luft in die klassische Wirbelschicht eingeleitet, daß der Sauerstoffgehalt im Abgas der klassischen Wirbelschicht 10 bis 12 % betrug. Das staubhaltige Abgas wurde dann in einen Filter geleitet, wo der Staub abgeschieden wurde. Das Abgas wurde nach der Filtrierung in die erste Waschflasche über ein Einleitungsrohr mit Fritte eingeleitet.

Die erste Waschflasche war mit einer stark sauren Lösung (pH = 1) gefüllt. Das Abgas wurde danach über ein Auslassungsrohr in eine zweite und danach in eine dritte Waschflasche geleitet, die mit derselben wässrigen Lösung gefüllt waren. Die Arsengehalte des Abgases nach der dritten Waschflasche lagen unterhalb der Nachweisgrenze, so daß das Abgas als gereinigtes Abgas in den Abzug geleitet werden konnte. Nach Beendigung des Versuchs wurde der Feststoffgehalt aus der klassischen Wirbelschicht und dem nachgeschalteten Filter ausgewogen und betrug 10,63 g. Eine chemische Analyse des ausgewogenen Feststoffes ergab, daß 98 % des ursprünglich eingesetzten Arsengehaltes in Form von Eisenarsenaten eingebunden waren. Die chemische Analyse des Feststoffs wurde durch Röntgenfluoreszenzanalyse durchgeführt. Die Löslichkeit des Feststoffs betrug 0,6 mg/l (DEV-$S_4$-Laugung). Der Inhalt der drei Waschflaschen wurde vereinigt und mit demineralisiertem Wasser auf 1 Liter aufgefüllt. Die wässrige Lösung wurde durch Atomabsorptionsspektroskopie untersucht. Das Ergebnis der Analyse zeigte, daß der Gehalt an Arsen 75 mg/l betrug. Das entspricht 2 % des ursprünglich eingesetzten Arsengehalts. Die stark saure Lösung wurde mit Eisenhydroxid bis zu einem pH-Wert von 4 versetzt. Danach wurde der Feststoff abgetrennt und das abgeschiedene Wasser durch Atomabsorptionsspektroskopie analysiert. Die Arsen- sowie Eisenkonzentration in Wasser lag unterhalb von 0,05 mg/l. Danach wurde das Wasser neutralisiert.

**Patentansprüche**

1. Verfahren zur Entsorgung von arsenhaltigen Kampfstoffen, dadurch gekennzeichnet, daß

   a) die arsenhaltigen Kampfstoffe bei Temperaturen von 700 bis 1300°C unter oxidierenden Bedingungen mit einem Sauerstoffgehalt im Abgas von mindestens 1 % verbrannt werden, wobei das Mol-Verhältnis von Wasserstoff zu dem in den arsenhaltigen Kampfstoffen enthaltenen Chlor in der Verbrennung von 1 bis 30 eingestellt wird;

   b) das Abgas gemäß (a) mit einer Temperatur von 400 bis 1000°C in eine Wirbelschicht eingeleitet wird;

   c) in die Wirbelschicht Zusatzstoffe, die aus einem oder mehreren Stoffen aus der Gruppe der Oxide, Hydroxide, Carbonate, Sulfate, Chloride von Eisen, Calcium, Magnesium, Aluminium oder Barium bestehen und die eine Korngröße unter 3 mm haben, eingeführt werden, wobei die Zusatzstoffe in einem stöchiometrischen Überschuß bezogen auf Arsen zugesetzt werden und der Arsengehalt bei einer Temperatur von 400 bis 1000°C in stabile Arsenate mit sehr geringer Löslichkeit in Wasser umgesetzt wird, und die Arsenate aus dem Gasstrom abgeschieden und abgeführt werden;

   d) das Abgas gemäß (c) in saurer oder alkalischer wässriger Phase gewaschen wird, wobei die gemäß (c) nicht zu stabilen Arsenaten umgesetzten und mit dem Abgas gemäß (c) entweichenden Arsenverbindungen in der wässrigen Phase abgeschieden werden;

e) das Arsen aus der wässrigen Phase gemäß (d) durch Zugabe von einem oder mehreren Zusatzstoffen aus der Gruppe der Oxide, Hydroxide, Carbonate, Sulfate, Chloride von Eisen, Calcium, Magnesium, Aluminium oder Barium gefällt wird;

f) aus der Suspension gemäß (d) und (e) der Feststoff abgeschieden und in die Wirbelschicht gemäß (b) zurückgeführt wird;

g) die gemäß (f) anfallende Lösung neutralisiert und entsorgt wird.

2. Verfahren nach Anspruch 1, dadurch gekennzeichnet, daß die Verbrennung gemäß (a) bei Temperaturen von 1000 bis 1200°C erfolgt.

3. Verfahren nach Anspruch 1 oder 2, dadurch gekennzeichnet, daS das Mol-Verhältnis von Wasserstoff zu Chlor bei der Verbrennung gemäß (a) von 1,5 bis 3 eingestellt wird.

4. Verfahren nach einem der Ansprüche 1 bis 3, dadurch gekennzeichnet, daß die Verbrennung gemäß (a) in einer Wirbelschicht mit einem Hilfsbett aus Tonerde, Sand oder Eisenoxid erfolgt.

5. Verfahren nach einem der Ansprüche 1 bis 4, dadurch gekennzeichnet, daß das Abgas gemäß (a) mit Temperaturen von 500 bis 700°C in die Wirbelschicht eingeführt wird.

6. Verfahren nach einem der Ansprüche 1 bis 5, dadurch gekennzeichnet, daß das Abgas gemäß (a) in das System einer zirkulierenden Wirbelschicht eingeleitet wird.

7. Verfahren nach einem der Ansprüche 1 bis 6, dadurch gekennzeichnet, daß zu der wässrigen Phase gemäß (d) Wasserstoffperoxid, Ozon oder $KMnO_4$ zugesetzt werden.

8. Verfahren nach einem der Ansprüche 1 bis 7, dadurch gekennzeichnet, daß mindestens 80 % der Zusatzstoffe gemäß (c) in einer Korngröße von 10 bis 200 μm eingesetzt werden.

**Claims**

1. A method for the disposal of arsenic-containing warfare agents, characterized in that

a) the arsenic-containing warfare agents are burnt at temperatures of 700 to 1300°C under oxidizing conditions with an oxygen content in the exhaust gas of at least 1 %, where the molar ratio between hydrogen and the chlorine contained in the arsenic-containing warfare agents is adjusted to be 1 to 30 during the combustion;

b) the exhaust gas according to (a) is introduced into a fluidized bed at a temperature of 400 to 1000°C;

c) additives, which consist of one or several substances from the group including oxides, hydroxides, carbonates, sulfates, chlorides of iron, calcium, magnesium, aluminum or barium and have a grain size below 3 mm, are introduced into the fluidized bed, where the additives are added in a stoichiometric surplus with reference to arsenic, and at a temperature of 400 to 1000°C the arsenic content is converted into stable arsenates having a very low solubility in water, and the arsenates are separated from the gas stream and discharged;

d) the exhaust gas according to (c) is washed in an acid or alkaline aqueous phase, where the arsenic compounds not converted to stable arsenates according to (c) and escaping together with the exhaust gas according to (c) are separated in the aqueous phase;

e) the arsenic from the aqueous phase according to (d) is precipitated by adding one or several additives from the group including oxides, hydroxides, carbonates, sulfates, chlorides of iron, calcium, magnesium, aluminum or barium;

f) from the suspension according to (d) and (e) the solid matter is separated and returned to the fluidized bed according to (b);

g) the solution obtained according to (f) is neutralized and disposed of.

2. The method as claimed in claim 1, characterized in that the combustion according to (a) is effected at temperatures of 1000 to 1200°C.

3. The method as claimed in claim 1 or 2, characterized in that the molar ratio between hydrogen and chlorine during the combustion according to (a) is adjusted to be in the range from 1.5 to 3.

4. The method as claimed in any of claims 1 to 3, characterized in that the combustion according to (a) is effected in a fluidized bed comprising an auxiliary bed of alumina, sand or iron oxide.

5. The method as claimed in any of claims 1 to 4, characterized in that the exhaust gas according to (a) is introduced into the fluidized bed at temperatures of 500 to 700°C.

**6.** The method as claimed in any of claims 1 to 5, characterized in that the exhaust gas according to (a) is introduced into the system of a circulating fluidized bed.

**7.** The method as claimed in any of claims 1 to 6, characterized in that hydrogen peroxide, ozone or $KMnO_4$ are added to the aqueous phase according to (d).

**8.** The method as claimed in any of claims 1 to 7, characterized in that at least 80 % of the additives according to (c) are used in a grain size of 10 to 200 μm.

**Revendications**

**1.** Procédé pour se débarrasser d'agents chimiques de combat contenant de l'arsenic, caractérisé en ce qu'il consiste

a) à brûler des agents chimiques de combat contenant de l'arsenic à des températures de 700 à 1300°C dans des conditions oxydantes avec une teneur en oxygène de l'effluent gazeux d'au moins 1 %, le rapport molaire de l'hydrogène au chlore contenu dans les agents chimiques de combat contenant de l'arsenic étant réglé lors de la combustion entre 1 et 30 ;
b) à envoyer l'effluent gazeux suivant (a) à une température de 400 à 1000°C dans un lit fluidisé ;
c) à introduire dans le lit fluidisé des additifs qui sont constitués d'une substance ou de plusieurs substances du groupe des oxydes, des hydroxydes, des carbonates, des sulfates, des chlorures de fer, de calcium, de magnésium, d'aluminium ou de baryum et qui ont une granulométrie inférieure à 3 mm, les additifs étant ajoutés en un excès stoechiométrique par rapport à l'arsenic et la teneur en arsenic étant transformée à une température de 400 à 1000°C en des arseniates stables de très faible solubilité dans l'eau et les arseniates étant séparés du courant gazeux et évacués ;
d) à laver l'effluent gazeux suivant (c) dans une phase aqueuse acide ou alcaline, les composés de l'arsenic qui n'ont pas été transformés suivant (c) en des arseniates stables et qui se dégagent avec l'effluent gazeux suivant (c) étant séparés dans la phase aqueuse ;
e) à précipiter l'arsenic dans la phase aqueuse suivant (d) par addition d'un ou plusieurs additifs du groupe des oxydes, hydroxydes, carbonates, sulfates, chlorures de fer, calcium, magnésium, aluminium ou baryum ;
f) à séparer de la suspension suivante (d) et (e) la matière solide et à la retourner au lit fluidisé suivant (b) ;

g) à neutraliser la solution se produisant suivant (f) et à s'en débarrasser.

**2.** Procédé suivant la revendication 1, caractérisé en ce qui consiste à effectuer la combustion suivant (a) et de température de 1000 à 1200°C.

**3.** Procédé selon la revendication 1 ou 2, caractérisé en ce qui consiste à régler au rapport molaire de l'hydrogène au chlore dans la combustion suivant (a) entre 1,5 et 3.

**4.** Procédé suivant l'une des revendications 1 à 3, caractérisé en ce qu'il consiste à effectuer la combustion suivant (a) dans un lit fluidisé ayant un lit auxiliaire en alumine, en sable ou en oxyde de fer.

**5.** Procédé suivant l'une des revendications 1 à 4, caractérisé en ce qu'il consiste à introduire l'effluent gazeux suivant (a) à des températures de 500 à 700°C dans le lit fluidisé.

**6.** Procédé suivant l'une des revendications 1 à 5, caractérisé en ce qu'il consiste à introduire l'effluent gazeux suivant (a) dans le système d'un lit fluidisé circulant.

**7.** Procédé suivant l'une des revendications 1 à 6, caractérisé en ce qu'il consiste à ajouter à la phase aqueuse suivant (d) du peroxyde d'hydrogène, de l'ozone ou $KMnO_4$.

**8.** Procédé suivant l'une des revendications 1 à 7, caractérisé en ce qu'au moins 80 % des additifs suivant (c) sont engagés en une granulométrie de 10 à 200 μm.

Fig.1

EP 0 596 559 B1

Fig.2